# EUROPEAN PATENT APPLICATION

(11) **EP 4 636 458 A1**
(43) Date of publication of application: **22.10.2025**
(21) Application number: 25162719.6
(22) Date of filing: 10.03.2025
(51) Int. Cl.: G02B 26/10

(54) **ROTATING MIRROR LASER SCANNER**

(30) Priority: 15.04.2024 CN 202410446386; 15.04.2024 CN 202420782171 U
(71) Applicant: Wuhan Dr Laser Technology Corp., Ltd., Wuhan 430078 (CN)
(72) Inventor: ALBER, Eldad, Harav Hagadol Ovadia Damti 12/8, Rehovot (IL); COHEN, Eyal, Keren Avraham 1, Kfar-Saba (IL); EINZIGER, Baruch, Hahagna 14, Gan Yavne (IL); FINAROV, Moshe, Prof. Einstein 16, Rehovot (IL); MARCU, Tal, Ahlama 4, Mevaseret Zion (IL); SHERIDAN, Mark Robin, 3/36 Ezer Weizman Street, Hod Hasharon (IL)
(74) Representative: Pearl Cohen Zedek Latzer Baratz UK LLP

(57) **Abstract**

Laser scanners are provided, for scanning laser radiation from a laser source onto a target. The laser scanners include a mirror having a reflective plane configured to reflect the laser radiation from the laser source onto the target, a holder with a rotating axis for mounting the mirror - with the rotating axis at the reflective plane of the mirror, and a motor configured to rotate the holder with the mirror - around the rotating axis. The configuration of the rotating mirror allows fast and accurate scanning of narrow features by the reflected laser radiation, such as thin paste-filled trenches in pattern transfer sheets for printing. Various mechanisms are provided to ensure accuracy and stability of the laser scanners, and to incorporate them within pattern transfer printing systems.

## Description

### BACKGROUND OF THE INVENTION

### TECHNICAL FIELD

The present invention relates to the fields of laser scanning and pattern transfer printing, and more particularly, to accurately scanning laser radiation across targets, using a rotating mirror assembly.

### DISCUSSION OF RELATED ART

Marshall 2004, Handbook of Optical and Laser Scanning, Marcel Dekker, Inc., teaches various types of scanners, e.g., in Chapter 4 by Glenn E. Stutz "Polygonal scanners: Components, performance, and design. This and other chapters in the handbook describe various types of beam scanning devices, such as polygon mirrors, resonant mirrors, acousto-optical deflectors, galvanometric mirrors, MEMS (micro-electromechanical systems) mirrors and spinning mirrors, each having their advantageous and disadvantages. U.S. Patents Nos. 4,870,274, 4,838,632 and 4,699,447, which are incorporated herein by reference in its entirety, teach various types of beam scanners with rotating mirrors.

### SUMMARY OF THE INVENTION

The following is a simplified summary providing an initial understanding of the invention. The summary does not necessarily identify key elements nor limit the scope of the invention, but merely serves as an introduction to the following description.

One aspect of the present invention provides a laser scanner comprising a laser source delivering laser radiation, a mirror having a reflective plane configured to reflect the laser radiation from the laser source onto a target, a holder having a rotating axis, wherein the mirror is mounted on the holder with the rotating axis being at the reflective plane of the mirror, and a motor configured to rotate the holder with the mirror - around the rotating axis. One aspect of the present invention provides a pattern transfer printing (PTP) system comprising the laser scanner configured to scan tape trenches filled by a conductive paste.

One aspect of the present invention provides a method of scanning laser radiation from a laser source onto a target, the method comprising: mounting a mirror onto a holder, wherein the mirror has a reflective plane and the holder has a rotating axis at the reflective plane of the mirror, and rotating the holder with the mirror around the rotating axis to reflect the laser radiation from the laser source onto the target by the reflective plane.

These, additional, and/or other aspects and/or advantages of the present invention are set forth in the detailed description which follows, possibly inferable from the detailed description, and/or learnable by practice of the present invention.

### BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout. In the accompanying drawings:
**Figures 1A, 1B** and **2** are high-level schematic illustrations of laser scanners, according to some embodiments of the invention.
**Figures 3A** and **3B** are high-level schematic illustrations of a laser scanner with an alignment fixture, according to some embodiments of the invention.
**Figure 4** is a high-level schematic illustration of a laser scanner comprising an enclosure, according to some embodiments of the invention.
**Figure 5** is a high-level flowchart illustrating a method of scanning laser radiation, according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various aspects of the present invention are described. For purposes of explanation, specific configurations and details are set forth in order to provide a thorough understanding of the present invention. However, it will also be apparent to one skilled in the art that the present invention may be practiced without the specific details presented herein. Furthermore, well-known features may have been omitted or simplified in order not to obscure the present invention. With specific reference to the drawings, it is stressed that the particulars shown are by way of example and for purposes of illustrative discussion of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before at least one embodiment of the invention is explained in detail, it is to be understood that the invention is not limited in its application to the details of construction and the arrangement of the components set forth in the following description or illustrated in the drawings. The invention is applicable to other embodiments that may be practiced or carried out in various ways as well as to combinations of the disclosed embodiments. Also, it is to be understood that the phraseology and terminology employed herein are for the purpose of description and should not be regarded as limiting.

Some embodiments of the present invention provide efficient and economical methods and mechanisms for accurately scanning laser radiation across targets, and thereby provide improvements to the technological fields of laser scanning and pattern transfer printing. Laser scanners are provided, for scanning laser radiation from a laser source onto a target. The laser scanners include a mirror having a reflective plane configured to reflect the laser radiation from the laser source onto the target, a holder with a rotating axis for mounting the mirror - with the rotating axis at the reflective plane of the mirror, and a motor configured to rotate the holder with the mirror - around the rotating axis. The configuration of the rotating mirror allows fast and accurate scanning of narrow features by the reflected laser radiation, such as thin paste-filled trenches in pattern transfer sheets for printing. Various mechanisms are provided to ensure accuracy and stability of the laser scanners, and to incorporate them within pattern transfer printing systems.

Disclosed embodiments provide accurate weight balance (alignment of the rotating assembly center of mass with the rotating axis) by using a mechanical design that (i) enables accurate balancing (disbalance compensation) by compensating for shifting of the center of mass of the mirror to one side of the rotating axis by an equivalent shift of the center of mass of the mirror holder to an opposite side of the rotating axis at both sides along the axis; and (ii) includes specified regions (e.g., two dedicated depressions), which enable adding or removing small amounts of material for enhancing the accuracy of the balance. During production and testing, accurate balancing is achieved by a balancing process that utilizes these design features, e.g., by measuring the degree of balancing, calculating the amount of material to be added to achieve full balancing, adding this amount of material into the dedicated depressions in the mirror holder and drying the mirror holder until the material is solidified and combined with the holder material, and if material removal is required, drilling through the dedicated depressions to achieve accurate balancing.

Advantageously, disclosed embodiments locate the rotating axis exactly on the mirror surface, preventing shortcomings of prior art designs such as shifting the mirror center of mass off the rotating axis, mirror distortion during high-speed rotation, nonuniform pressure on motor shaft or bearings during a rotation with associated vibrations and increased mechanical wearing. Disclosed embodiments also have a high moment of inertia that reduces sensitivity to vibrations and provides stability over a wide range of scanning frequencies, while not requiring complex motor control for stabilization, as is required in prior art designs. Moreover, disclosed embodiments control the timing of the laser source with respect to the position of the mirror, switching the laser on only within a certain angular range of the spinning mirror, but without requiring a complicated timing control system as required in prior art designs. Finally, disclosed embodiments enable aligning the laser beam location relative to the scanned area as well as preventing contamination of the mirror surface, e.g., by dust particles - thereby reducing or avoiding laser beam scattering.

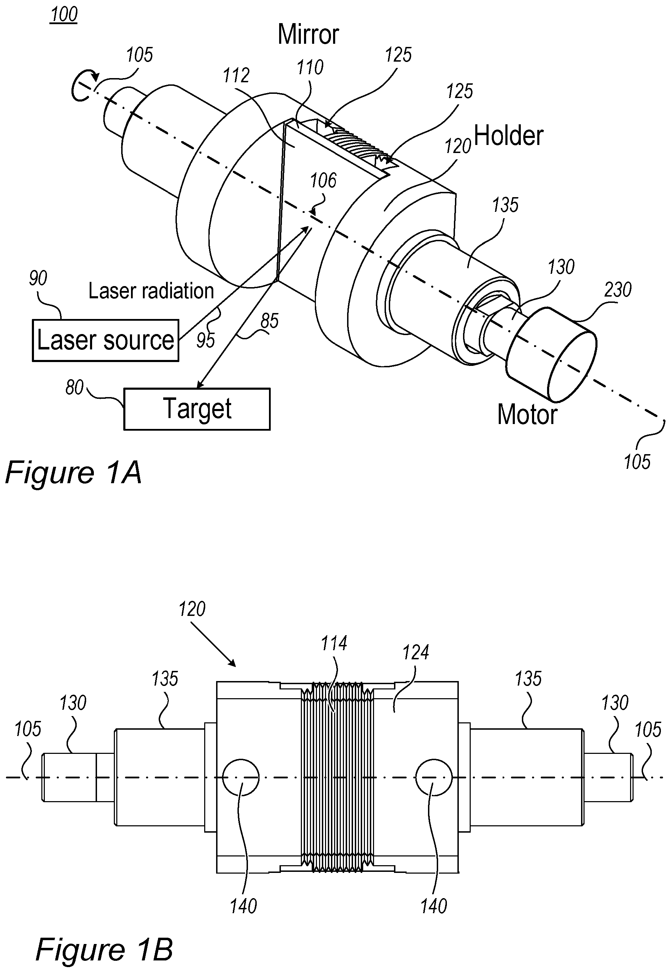

**Figures 1A** and **1B** are high-level schematic illustrations of a laser scanner **100,** according to some embodiments of the invention. **Figure 1A** is a perspective front view and **Figure 1B** is a back view of laser scanner **100,** as explained herein.

Laser scanner **100** comprises a laser source **90** delivering laser radiation **95,** a mirror **110** having a reflective plane **112** configured to reflect laser radiation **95** from laser source **90** as beam **85** onto a target **80,** a holder **120** having a rotating axis **105,** wherein mirror **110** is mounted on holder **120** with rotating axis **105** being at reflective plane **112** of mirror **110** (this condition is denoted by numeral **106**), and a motor **230** configured to rotate holder **120** with mirror **110-** around rotating axis **105.**

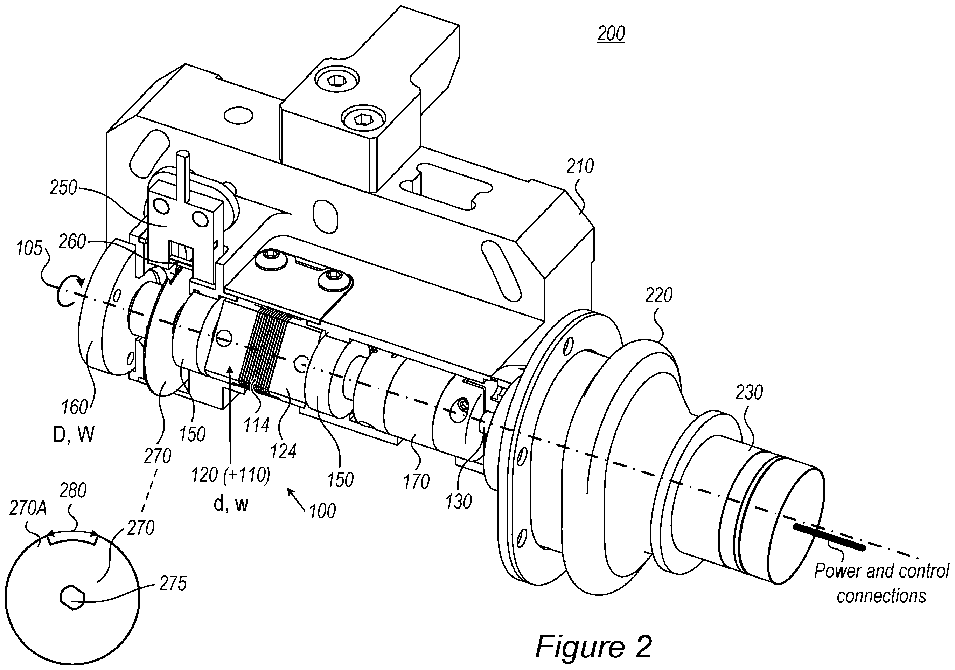

For example, motor **230** (see, e.g., **Figure 2**) may apply the rotation via a motor shaft **130** that moves a bearing shaft **135** that is attached to or is part of holder **120.** Holder **120** may further comprise recesses **125** (illustrated schematically in **Figure 1A**) for holding and bonding mirror **110.**

**Figure 1B** further illustrates, on a back side **124** of holder **120** (opposite to reflective plane **112** of mirror **110**), a textured back mirror surface **114** configured to scatter high power laser radiation at angles of rotation (of holder **120** about axis **105**) that are not usable for laser scanning - as a safety measure for cases in which the laser is not switched off during the rotation of holder **120** through positions that do not enable reflection of laser radiation **95** by reflective plane **112** of mirror **110.**

In various embodiments, laser scanner **100** further comprising specified regions on side **124** of holder **120** for adding or removing material to balance holder **120** with mounted mirror **120** about rotating axis **105** at reflective plane **112** of mirror **110** (**106**). As an example for these specified regions, **Figure 1B** further illustrates depressions **140** on back side **124** of holder **120** - for adding and/or removing material to balance holder **120** with mounted mirror **110** and locate (or ensure location) of a center of mass of holder **120** with mounted mirror **110** - on rotating axis **105.** Accurate weight balance is required to align the center of mass of the rotating assembly (holder **120** with mounted mirror **110,** and any further rotating elements disclosed herein) with rotating axis **105,** in order to prevent vibrations and deviations, and maintain accuracy and reliability of laser scanner **100.** Accurate weight balance may be achieved by any of the following configurations or their combinations.

In some embodiments, the mechanical design and structure of holder **120** and mirror **110** may be adjusted to yield accurate balancing, e.g., by compensating imbalances such as compensating for a shift of the center of mass of mirror **110** to one side of rotating axis **105** by an equivalent shift of the center of mass of mirror holder **120** to an opposite side of rotating axis **105** at both sides along axis **105.**

In some embodiments, balancing may be accurately adjusted by addition or removal of material to or from depressions **140,** as dedicated locations for accurate adjustment of the balance. For example, a balancing compound may be added to one or more depressions **140,** and/or material may be drilled away or otherwise removed from one or more depressions **140.** Non-limiting examples for balancing compounds may comprise epoxy-based materials (such as BC-22 from Star Technology). The configuration of depressions **140** may vary, e.g., two depressions along a parallel line to rotation axis **105** may be used, and/or additional or other locations for depressions **140** may be selected to enable accurate balancing. For example, as part of testing assembled laser scanner **100,** the degree of balancing may be measured and the amount of material to be added or removed for full and accurate balancing may be calculated. Accordingly, a calculated amount of material may be added into dedicated depressions **140** in mirror holder **120** and dried until the material is solidified and combined with the holder material (e.g., stainless steel AISI304) and/or a calculated amount of material may be removed from depressions **140,** e.g., by drilling, with the shape of depressions **140** configured to simplify centering the drilling elements.

**Figure 2** is a high-level schematic illustration of laser scanner **200,** according to some embodiments of the invention. **Figure 2** is a perspective view of laser scanner **200** with scanner body **210,** motor **230** and seal **220,** in addition to laser scanner **100** with holder **120** and mirror **110** illustrated schematically in **Figures 1A** and **1B****.** Configurations of laser scanner **100** may be mounted into configurations of laser scanner **200** via bearings **150** or directly on motor shaft **130.** Configurations of laser scanner **100** may be connected to motor **230** via a coupling **170,** and motor **230** may be a direct drive motor (e.g., of the series ECX SP22L from Maxon International Ltd.).

**Figure 2** further illustrates an optional stabilization disk **160** and internal thru-beam sensor **250** with laser control disk **270** described herein. It is noted that various embodiments of laser scanners **100** illustrated schematically in **Figures 1A** and **1B** may be used as the core elements of laser scanners **200** illustrated schematically in **Figure 2****.**

In various embodiments, laser scanner **200** may further comprise stabilization disk **160** that is mounted on rotating axis **105** and has a moment of inertia that is larger than a moment of inertia of holder **120** with mounted mirror **110.** Stabilization disk **160** may be configured to stabilize the resulting rotation speed of mirror **110** around axis **105** - as increasing the overall moment of inertia of the rotating assembly decreases the sensitivity to all sources of vibrations, both internal (e.g., within bearings **150**or motor **230**) and external (e.g., vibrations from other parts of laser scanner **200** and surrounding area). The large moment of inertia of stabilization disk **160** may be achieved in various means, e.g., by stabilization disk **160** having a diameter (indicated schematically by **D**) and a weight (indicated schematically by **W**) that are larger, respectively, than a diameter and a weight of holder **120** with mounted mirror **110** (indicated schematically by **d** and **w,** respectively). The moment of inertia of stabilization disk **160** may be reached by making stabilization disk **160** larger and therefore heavier (e.g., larger diameter and weight than holder **120** with mirror **110**) and/or making stabilization disk **160** from a heavy material (having a high specific gravity) including steel, lead, chromium, etc.

In various embodiments, laser scanner **200** may further comprise thru-beam sensor **250** to control operation of laser source **90,** and control disk **270** that is mounted on rotating axis **105** and has a periphery **270A** that does not interrupt thru-beam sensor **250** over a specified angular range **280** during rotation of disk **270,** which lets the beam pass through to sensor **250** and enabling to switch on laser source **90.** Numeral **260** indicates schematically a beam generated by thru-beam sensor **250** and interrupted by periphery **270A** of disk **270** but not by specified angular range **280** thereof.

In some embodiments, control disk **270** except for specified angular range **280** - may be configured to interrupt thru-beam sensor **250** at angles in which mirror **110** is required to reflect laser radiation **95** for scanning, and interrupted thru-beam sensor **250** enables laser source **90.** In such embodiments, laser source **90** may be switched on when specified angular range **280** of disk **270** is not in front of thru-beam sensor **250.**

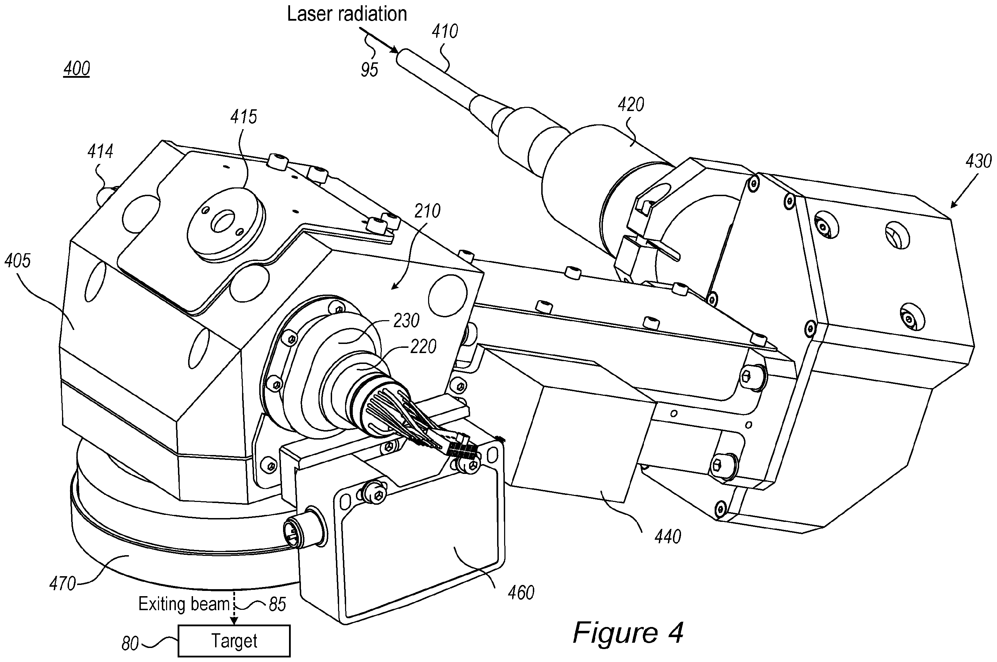

In various embodiments, spinning mirror **110** may have an angular range within ±90° to reflect laser beam **95** (to form beam **85**), with corresponding incidence angles of the beam within ±90° relative to the normal to reflective plane **112** of mirror **110.** In various embodiments, the angular range of reflection may be much smaller (e.g., ±60°, ±45°, ±30° or intermediate values) due to limitations of the focusing optics of beam **85** delivered by laser scanner **200** such as an F-Theta lens (see, e.g., **470** on **Figure 4**). As illustrated schematically in **Figure 2****,** thru-beam sensor **250** and control disk **270** may be used to stop operation of laser source **90** beyond the angular range that is used for scanning laser beam **95** across target **80.** Specifically, thru-beam sensor **250** and control disk **270** may be used to switch laser source **90** off when mirror **110** spins out of the effective reflective angular range. Switching off laser source **90** at unused angles enables to avoid undesired high power laser radiation dissipation within the scanner and also to save the laser lifetime. Advantageously, disclosed mechanism of thru-beam sensor **250** and control disk **270** is effective and simpler than prior art means of synchronizing the laser timing with the mirror angular position (e.g., precise motor encoders and associated electronics, which are costly and require calibration of the encoder readout to the actual position of the mirror). Specified angular range **280** on periphery **270A** of disk **270** mounted on axis **105** is used to synchronize the mirror angular position relative to axis **105** with the activation of laser source **90** - free angular range **280** allows defining the operation period of laser source **90** with respect to the position of mirror **110** inside or outside the effective reflective angular range. Specified angular range **280** may be configured to define on periods or off periods of laser source **90,** depending on the configuration of disk **270** and thru-beam sensor **250.** For example, when disk **270** crosses the beam of thru-beam sensor **250** outside angular range **280,** laser source **90** may be switched OFF and when angular range **280** enables the beam of thru-beam sensor **250** to pass uninterrupted, laser source **90** may be switched ON (only at the effective reflective angular range of mirror **110**). Angular range **280** of disk **270** may be aligned with respect to the angular position of mirror **110,** e.g., using a D-shaped mounting hole **275** on disk **270** and a corresponding D-shape rotating shaft section, which is a part of either mirror holder **120** or motor shaft **130.**

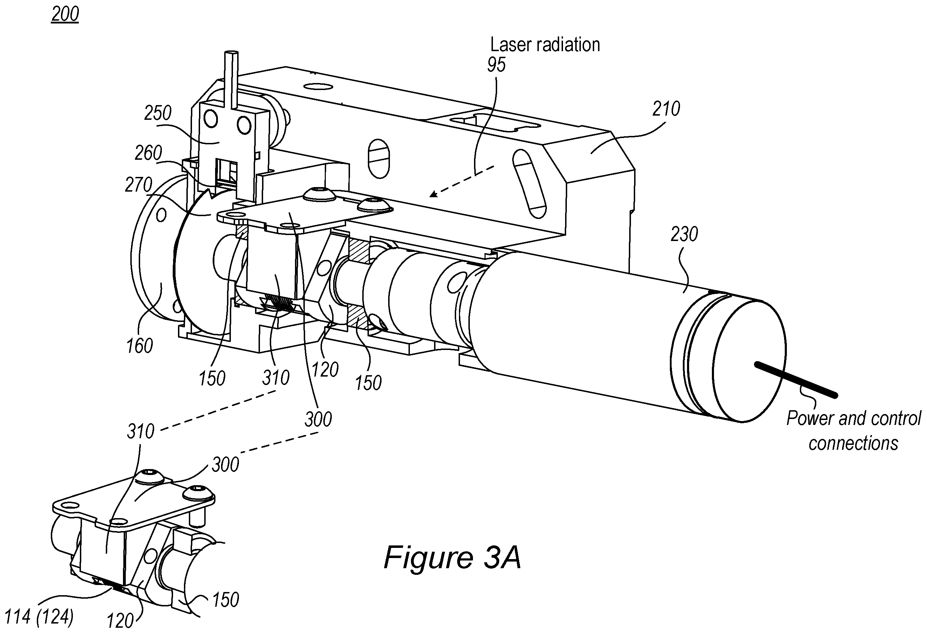

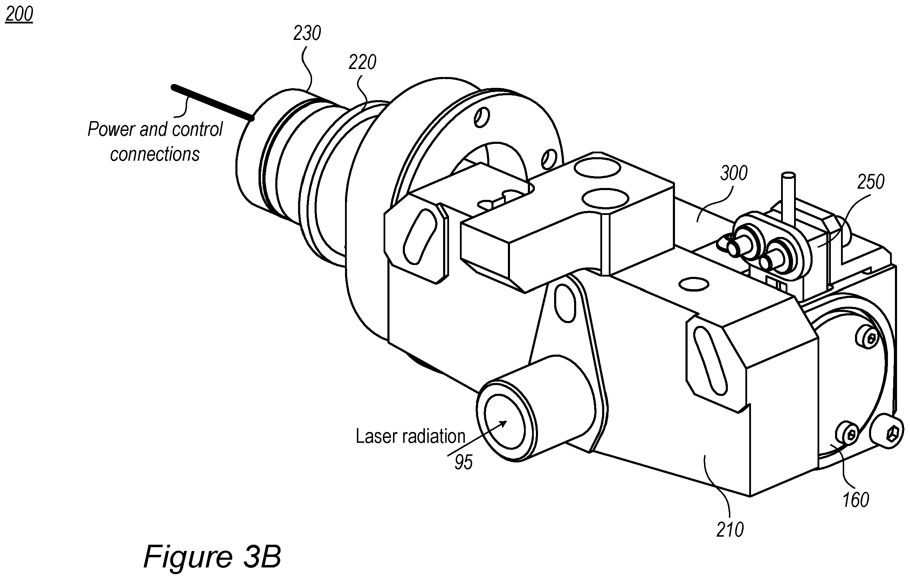

**Figures 3A** and **3B** are high-level schematic illustrations of laser scanner **200** with an alignment fixture **300,** according to some embodiments of the invention. **Figure 3A** provides a front view and **Figure 3B** provides a rear view of laser scanner **200.** Laser scanner **200** may further comprise alignment fixture **300** used to temporarily affix mirror **110** in a zero angular position during a scanner alignment stage, in which laser beam location calibration is carried out relative to a scanned line.

Alignment fixture **300** may comprise a tenon **310** configured to contact mirror holder backplane **124** (see **Figure 1B**) to locate front mirror plane **112** (see **Figure 1A**) at the nominal angular position relative to the laser beam (zero mirror position) - to conduct the scanner alignment with mirror **110** at the pre-determined setting. Advantageously, fixture **300** enables aligning a zero position of mirror **110** - to allow directing the laser beam of the scanner at a nominal angle relative to mirror front plane **112** (usually at 45°, but possibly at a different angle) and towards the center of the scanning line (as an example for target **80**). Alignment fixture **300** may be further configured to remove tenon **310** from contacting back side **124** of holder **120** after alignment and during operation, to allow free rotation of holder **120** with mounted mirror **110.** Advantageously, disclosed embodiments enable achieving the alignment of mirror **110** to target object **80** using a mechanical design, while keeping mirror **110** operationally free to rotate and without resorting to implementing an angular motion control, which is much more complex and costly. Alignment fixture **300** with tenon **310** (e.g., connected to fixture **300** by a tenon holder) contacts mirror holder back surface **124,** e.g., at both sides of the textured back surface, and temporarily, at the system alignment stage, is mounted to scanner body **210** and affixes mirror **110** in a static zero-position. Once the laser beam alignment is complete, tenon **310** may be removed and stored on scanner body **210** for a next use. Laser radiation **95** may enter laser scanner **200** from the back (illustrated schematically in **Figure 3B**) and the beam may be directed within laser scanner **200** onto mirror **110** (illustrated schematically in **Figure 3A**).

**Figure 4** is a high-level schematic illustration of laser scanner **400** comprising an enclosure **405,** according to some embodiments of the invention. It is noted that laser scanner **400** (including embodiments of a full laser scanner based on a rotating mirror, which includes also the laser and laser beam focusing optics) may comprise various embodiments of laser scanners **100** (including the rotating mirror sub-assembly) illustrated schematically in **Figures 1A** and **1B** and/or various embodiments of laser scanners **200** (including the rotating mirror assembly with a body and sensor) illustrated schematically in **Figures 2** and **3****.** It is noted that laser scanner configurations **100** and/or **200** may be implemented in different designs of full laser scanner **400,** using the disclosed principles.

Any of laser scanners **100, 200** may be set within enclosure **405** (e.g., to form laser scanner **400**), which may have an inlet **415** for purging an internal volume of laser scanner **400** with clean air or gas (e.g., clean pressed air - CPA, or clean gas, e.g., nitrogen) to avoid contamination of mirror **110.** Enclosure **405** may fully or partly seal spinning mirror **110** and holder **120** (see seal **220**) except for CPA purge inlet **414** and outlet **415** (e.g., outlet **415** may comprise a one-way valve with a specified break point).

**Figure 4** further illustrates a beam delivery unit **430** comprising two mirrors for accurate beam alignment and other optional optical components (internal, not shown), as well as a laser beam collimator **420** and a fiber of a fiber laser **410** (e.g., from or as laser source **90** delivering laser beam **95,** e.g., through aperture **320** illustrated in **Figures 3A** and **3B**).

Optionally, laser scanner **400** may further comprise a laser distance sensor **460** configured to accurately measure the distance between scanner **400** and the receiving substrate of target **80,** and maintain or adjust the distance to be within predefined specifications, e.g., in the range between 50µm-500µm, to reach specified printing quality and resolution requirements.

Laser scanner **400** may further comprise a motor driver **440** which may include a motor controller, such as e.g., EPOS4 Compact 50/5 CAN controller and driver from Maxon International Ltd.

In some embodiments, rotation of mirror **110** about rotating axis **105** may be employed for fast scanning, and laser scanner **400** may further comprise a mechanical motion system (not illustrated) to move scanner **400** for scanning along an orthogonal slow scanning axis - to yield two-dimensional scanning. Accordingly, disclosed precise and fast 1D spinning mirror scanners configurations **100, 200, 400** may be used to implement 2D scanners by adding a slow movement axis, e.g., (i) using a linear motor axis, configured to move the 1D scanner in the orthogonal direction, or (ii) using a second scanning mirror such as a galvanometer (galvo) scanner to implement the slow axis is the orthogonal direction.

Laser scanner **400** may further comprise a F-Theta lens **470** and/or other optical means to focus laser beam **85** exiting laser scanner **400** (after reflection of laser beam **95** by mirror **110**).

Any of laser scanner configurations **100, 200, 400** may be used in a pattern transfer printing (PTP) system, configured to apply patterns of conductive material onto wafers by non-contact printing. For example, trenches in pattern transfer sheets (e.g., on a continuous pattern transfer tape) may be filled with conductive paste, which, upon scanning the trenches by laser scanner **400,** are released from the trenches onto adjacent wafers, as described, e.g., in U.S. Patent No. 11,910,537, incorporated herein by reference in its entirety.

Advantageously, high scanning speed and precise location of the focused beams provided by spinning mirror scanner configurations **100, 200, 400** are important features for different industrial laser-based processing systems in which high spatial resolution is required and are especially valuable for high resolution laser printing systems. For example, spinning mirror scanner **400** may be very efficient for PTP systems, in which they enable a small high-power laser beam to scan very narrow trenches in a tape carrier or sheets filled by the conductive paste.

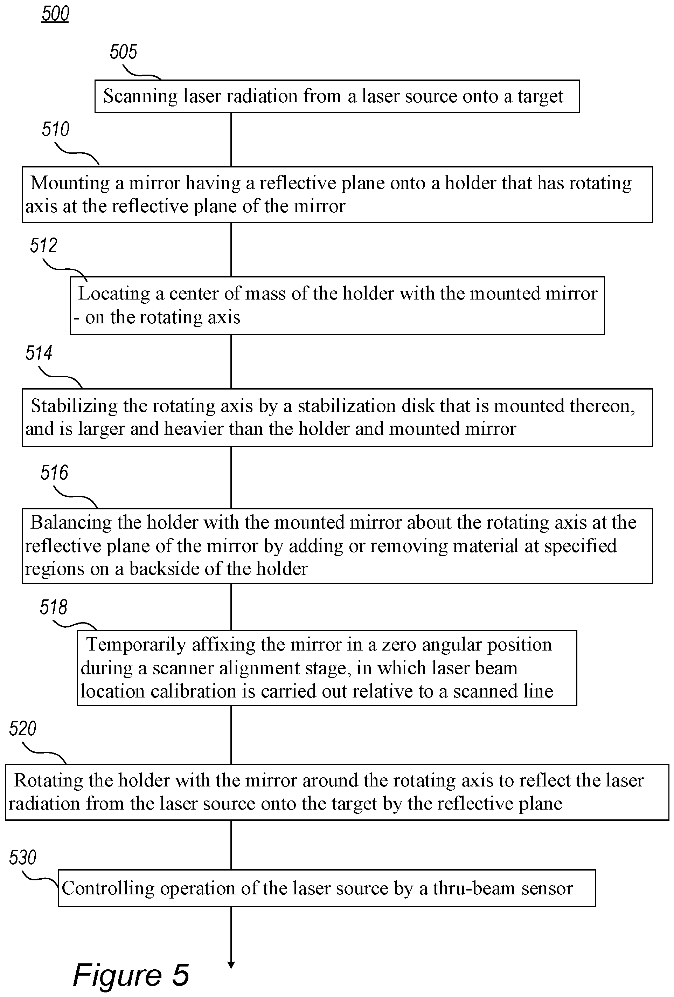

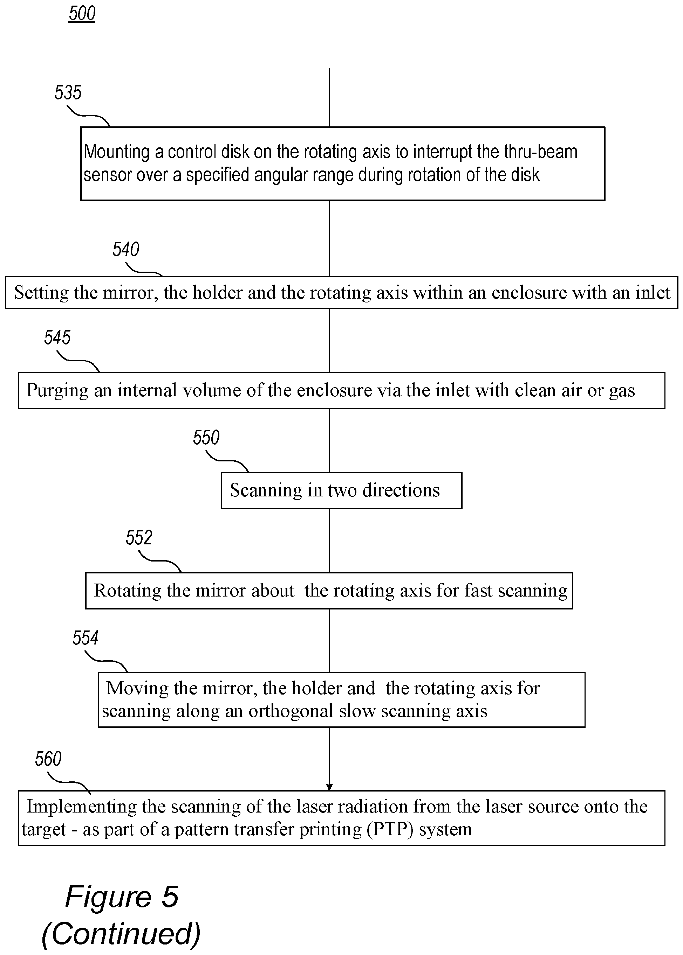

**Figure 5** is a high-level flowchart illustrating a method **200,** according to some embodiments of the invention. The method stages may be carried out with respect to laser scanners **100, 200, 400** described above, which may optionally be configured to implement method **200.** Method **500** may be at least partially implemented by at least one computer processor, e.g., in a controller of laser scanners **100, 200, 400.** Certain embodiments comprise computer program products comprising a computer readable storage medium having computer readable program embodied therewith and configured to carry out the relevant stages of method **500.** Method **500** may comprise the following stages, irrespective of their order.

Method **500** of scanning laser radiation from a laser source onto a target (stage **505**) may comprise mounting a mirror onto a holder, wherein the mirror has a reflective plane and the holder has a rotating axis at the reflective plane of the mirror (stage **510**), and rotating the holder with the mirror around the rotating axis to reflect the laser radiation from the laser source onto the target by the reflective plane (stage **520**).

Method **500** may further comprise locating a center of mass of the holder with the mounted mirror - on the rotating axis (stage **512**). In certain embodiments, method **500** may further comprise stabilizing the rotating axis by a stabilization disk that is mounted thereon, and has a larger moment of inertia, e.g., is larger and heavier - than the holder and mounted mirror (stage **514**).

In certain embodiments, method **500** may further comprise controlling operation of the laser source by a thru-beam sensor (stage **530**), e.g., by mounting a control disk on the rotating axis to interrupt the thru-beam sensor over a specified angular range during rotation of the disk (stage **535**). For example, method **500** may comprise configuring the interrupting angular range to correspond to angles in which the mirror is not required to reflect the laser radiation for scanning - and disabling the laser source by the thru-beam sensor during the interruption.

In certain embodiments, method **500** may further comprise balancing the holder with the mounted mirror about the rotating axis at the reflective plane of the mirror by adding or removing material at specified regions on a backside of the holder (stage **516**). In various embodiments, finely balancing the holder with the mounted mirror about the rotating axis at the reflective plane of the mirror **516** may further comprise, e.g., carrying out wobble measurement, calculating needed mass adding/removing, adding/removing the needed mass in the dedicated depressions and verifying the reached balancing by repeated wobble measurement.

In certain embodiments, method **500** may further comprise temporarily affixing the mirror in a zero angular position during a scanner alignment stage, in which laser beam location calibration is carried out relative to a scanned line (stage **518**).

In certain embodiments, method **500** may further comprise setting at least the mirror, the holder and at least part of the rotating axis within an enclosure with an inlet (stage **540**), and purging an internal volume of the enclosure via the inlet with clean air or gas (stage **545**).

In certain embodiments, method **500** may further comprise scanning in two directions (stage **550**) by rotating the mirror about the rotating axis for fast scanning (stage **552**), and moving at least the mirror, the holder and at least part of the rotating axis - for scanning along an orthogonal slow scanning axis (stage **554**).

In certain embodiments, method **500** may further comprise implementing the scanning of the laser radiation from the laser source onto the target - as part of a pattern transfer printing (PTP) system (stage **560**), e.g., wherein the target comprises tape trenches filled by a paste.

Elements from **Figures 1A-5** may be combined in any operable combination, and the illustration of certain elements in certain figures and not in others merely serves an explanatory purpose and is non-limiting.

Advantageously, disclosed scanners are simpler in structure (providing inherent advantages over polygon mirrors, acousto-optical deflectors - AODs) and are less limited in performance compared to other designs - e.g., more accurate than polygon mirrors, have a more uniform scanning speed compared with resonant mirrors and have broader spectral ranges than AODs, broader frequency ranges than galvanometric mirrors, and broader angular ranges (and larger mirrors) than MEMS mirrors. While spinning mirrors are known to provide high accuracy of the laser beam location on the scanning area, prior art designs are deficient with respect to multiple design aspects, including the exact positioning and balancing of the mirror, stabilization of mirror movements and preventing mirror vibrations, the coordination between the laser source and the rotation of the mirror, and maintaining the cleanliness of the mirror. Advantageously, disclosed scanners solve these technical problems as disclosed above, providing an accurate and reliable spinning mirror laser scanner for various uses.

In the above description, an embodiment is an example or implementation of the invention. The various appearances of "one embodiment", "an embodiment", "certain embodiments" or "some embodiments" do not necessarily all refer to the same embodiments. Although various features of the invention may be described in the context of a single embodiment, the features may also be provided separately or in any suitable combination. Conversely, although the invention may be described herein in the context of separate embodiments for clarity, the invention may also be implemented in a single embodiment. Certain embodiments of the invention may include features from different embodiments disclosed above, and certain embodiments may incorporate elements from other embodiments disclosed above. The disclosure of elements of the invention in the context of a specific embodiment is not to be taken as limiting their use in the specific embodiment alone. Furthermore, it is to be understood that the invention can be carried out or practiced in various ways and that the invention can be implemented in certain embodiments other than the ones outlined in the description above.

The invention is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims and their legal equivalents.

The subject matter of the following clauses also forms part of the present disclosure.

### CLAUSES

1. A laser scanner that received laser radiation from a laser source, the laser scanner comprising:
   a mirror having a reflective plane configured to reflect the laser radiation from the laser source onto a target,
   a holder having a rotating axis, wherein the mirror is mounted on the holder with the rotating axis being at the reflective plane of the mirror, and
   a motor configured to rotate the holder with the mirror - around the rotating axis,
   wherein a center of mass of the holder with the mounted mirror - is located on the rotating axis.
2. The laser scanner of clause 1, further comprising specified regions on a backside of the holder for adding or removing material to balance the holder with the mounted mirror about the rotating axis at the reflective plane of the mirror.
3. The laser scanner of clause 1 or 2, further comprising a stabilization disk that is mounted on the rotating axis and has a moment of inertia that is larger than a moment of inertia of the holder with the mounted mirror.
4. The laser scanner of any one of clauses 1-3, further comprising:
   a thru-beam sensor to control operation of the laser source, and
   a control disk that is mounted on the rotating axis and has a periphery that interrupts the thru-beam sensor over a specified angular range during rotation of the disk,
   wherein the control disk except for the specified angular range is configured to interrupt the thru-beam sensor at angles in which the mirror is not required to reflect the laser radiation for scanning, and the interrupted thru-beam sensor disables the laser source.
5. The laser scanner of any one of clauses 1-4, further comprising:
   a thru-beam sensor to control operation of the laser source, and
   a control disk that is mounted on the rotating axis and has a periphery that interrupts the thru-beam sensor over a specified angular range during rotation of the disk,
   wherein the control disk except for the specified angular range is configured to interrupt the thru-beam sensor at angles in which the mirror is required to reflect the laser radiation for scanning, and the interrupted thru-beam sensor enables the laser source.
6. The laser scanner of any one of clauses 1-5, further comprising a temporarily-used alignment fixture to temporarily affix the mirror in a zero angular position during a scanner alignment stage, in which laser beam location calibration is carried out relative to a scanned line.
7. The laser scanner of any one of clauses 1-6, set within an enclosure with an inlet for purging an internal volume of the laser scanner with clean air or gas.
8. The laser scanner of any one of clauses 1-7, wherein rotating the mirror about the rotating axis is employed for fast scanning, and the laser scanner further comprises a mechanical motion system to move the scanner for scanning along an orthogonal slow scanning axis - to yield two-dimensional scanning.
9. A pattern transfer printing (PTP) system comprising the laser scanner of any one of clauses 1-8, configured to scan tape trenches filled by a paste.
10. A method of scanning laser radiation from a laser source onto a target, the method comprising:
   mounting a mirror onto a holder, wherein the mirror has a reflective plane and the holder has a rotating axis at the reflective plane of the mirror,
   rotating the holder with the mirror around the rotating axis to reflect the laser radiation from the laser source onto the target by the reflective plane, and
   locating a center of mass of the holder with the mounted mirror - on the rotating axis.
11. The method of clause 10, further comprising balancing the holder with the mounted mirror about the rotating axis at the reflective plane of the mirror by adding or removing material at specified regions on a backside of the holder.
12. The method of clause 10 or 11, further comprising stabilizing the rotating axis by a stabilization disk that is mounted thereon, and has a larger moment of inertia is than the holder and mounted mirror.
13. The method of any one of clauses 10-12, further comprising:
   controlling operation of the laser source by a thru-beam sensor, and
   mounting a control disk on the rotating axis to interrupt the thru-beam sensor over a specified angular range during rotation of the disk, in which the mirror is not required to reflect the laser radiation for scanning,
   wherein the interrupting of the thru-beam sensor disables the laser source.
14. The method of any one of clauses 10-13, further comprising temporarily affixing the mirror in a zero angular position during a scanner alignment stage, in which laser beam location calibration is carried out relative to a scanned line.
15. The method of any one of clauses 10-14, further comprising:
   setting at least the mirror, the holder and at least part of the rotating axis within an enclosure with an inlet, and
   purging an internal volume of the enclosure via the inlet with clean air or gas.
16. The method of any one of clauses 10-15, further comprising scanning in two directions by:
   rotating the mirror about the rotating axis for fast scanning, and
   moving at least the mirror, the holder and at least part of the rotating axis - for scanning along an orthogonal slow scanning axis.
17. The method of any one of clauses 10-16, further comprising implementing the scanning of the laser radiation from the laser source onto the target - as part of a pattern transfer printing (PTP) system, wherein the target comprises tape trenches filled by a paste.

## Claims

1. A laser scanner that received laser radiation from a laser source, the laser scanner comprising:
a mirror having a reflective plane configured to reflect the laser radiation from the laser source onto a target;
a holder having a rotating axis, wherein the mirror is mounted on the holder with the rotating axis being at the reflective plane of the mirror; and
a motor configured to rotate the holder with the mirror around the rotating axis;
wherein a center of mass of the holder with the mounted mirror is located on the rotating axis.

2. The laser scanner of claim 1, further comprising specified regions on a backside of the holder for adding or removing material to balance the holder with the mounted mirror about the rotating axis at the reflective plane of the mirror.

3. The laser scanner of claim 1 or 2, further comprising: a stabilization disk that is mounted on the rotating axis and has a moment of inertia that is larger than a moment of inertia of the holder with the mounted mirror.

4. The laser scanner of any one of claims 1-3, further comprising:
a thru-beam sensor to control operation of the laser source; and
a control disk that is mounted on the rotating axis and has a periphery that interrupts the through-beam sensor over a specified angular range during rotation of the disk;
wherein the control disk except for the specified angular range is configured to interrupt the thru-beam sensor at angles in which the mirror is not required to reflect the laser radiation for scanning, and the interrupted thru-beam sensor disables the laser source.

5. The laser scanner of any one of claims 1-3, further comprising:
a through-beam sensor to control operation of the laser source; and
a control disk that is mounted on the rotating axis and has a periphery that interrupts the thru-beam sensor over a specified angular range during rotation of the disk,
wherein the control disk except for the specified angular range is configured to interrupt the thru-beam sensor at angles in which the mirror is required to reflect the laser radiation for scanning, and the interrupted thru-beam sensor enables the laser source.

6. The laser scanner of any one of claims 1-5, further comprising: a temporarily-used alignment fixture to temporarily affix the mirror in a zero angular position during a scanner alignment stage, in which laser beam location calibration is carried out relative to a scanned line.

7. The laser scanner of any one of claims 1-6, set within an enclosure with an inlet for purging an internal volume of the laser scanner with clean air or gas.

8. The laser scanner of any one of claims 1-7, wherein rotating the mirror about the rotating axis is employed for fast scanning, and the laser scanner further comprises a mechanical motion system to move the scanner for scanning along an orthogonal slow scanning axis - to yield two-dimensional scanning.

9. A pattern transfer printing (PTP) system comprising the laser scanner of any one of claims 1-8, configured to scan tape trenches filled by a paste.

10. A method of scanning laser radiation from a laser source onto a target, the method comprising:
mounting a mirror onto a holder, wherein the mirror has a reflective plane and the holder has a rotating axis at the reflective plane of the mirror;
rotating the holder with the mirror around the rotating axis to reflect the laser radiation from the laser source onto the target by the reflective plane; and
locating a center of mass of the holder with the mounted mirror - on the rotating axis.

11. The method of claim 10, further comprising: balancing the holder with the mounted mirror about the rotating axis at the reflective plane of the mirror by adding or removing material at specified regions on a backside of the holder; and/or further comprising stabilizing the rotating axis by a stabilization disk that is mounted thereon, and has a larger moment of inertia than the holder and the mounted mirror.

12. The method of claim 10 or 11, further comprising:
controlling operation of the laser source by a thru-beam sensor; and
mounting a control disk on the rotating axis to interrupt the thru-beam sensor over a specified angular range during rotation of the disk, in which the mirror is not required to reflect the laser radiation for scanning,
wherein the interrupting of the thru-beam sensor disables the laser source,
and optionally further comprising temporarily affixing the mirror in a zero angular position during a scanner alignment stage, in which laser beam location calibration is carried out relative to a scanned line.

13. The method of any one of claims 10-12, further comprising:
setting at least the mirror, the holder and at least part of the rotating axis within an enclosure with an inlet; and
purging an internal volume of the enclosure via the inlet with clean air or gas.

14. The method of any one of claims 10-13, further comprising scanning in two directions by:
rotating the mirror about the rotating axis for fast scanning; and
moving at least the mirror, the holder and at least part of the rotating axis - for scanning along an orthogonal slow scanning axis.

15. The method of any one of claims 10-14, further comprising: implementing the scanning of the laser radiation from the laser source onto the target - as part of a pattern transfer printing (PTP) system, wherein the target comprises tape trenches filled by a paste.
